Europäisches Patentamt

(19) European Patent Office

Office européen des brevets

(11) EP 0 587 215 B1

## (12) EUROPEAN PATENT SPECIFICATION

(45) Date of publication and mention
of the grant of the patent:
**10.04.1996 Bulletin 1996/15**

(21) Application number: 93202397.1

(22) Date of filing: 16.08.1993

(51) Int. Cl.$^6$: **C01B 25/45**, C01B 33/26, B01J 29/03, B01J 20/02, B01J 20/16

(54) **Aluminophosphates containing cobalt and/or silicon and process for preparing the same**

Kobalt und/oder Silicium enthaltende Alumophosphate sowie Verfahren zur ihrer Herstellung

Aluminophosphates contenant du cobalt et/ou du silicium et leur procédé de préparation

(84) Designated Contracting States:
**CH DE FR GB LI NL SE**

(30) Priority: **17.08.1992 EP 92202513**

(43) Date of publication of application:
**16.03.1994 Bulletin 1994/11**

(73) Proprietor: **SHELL INTERNATIONALE RESEARCH MAATSCHAPPIJ B.V.
NL-2596 HR Den Haag (NL)**

(72) Inventors:
• **Kraushaar-Czarnetzki, Bettina
NL-1031 CM Amsterdam (NL)**
• **Hoogervorst, Willemina Gerarda Maria
NL-1031 CM Amsterdam (NL)**

(56) References cited:
**EP-A- 0 103 117**

• **CHEMICAL ABSTRACTS, vol. 115, no. 10, 09 September 1991, Columbus, OH (US); p. 752, no. 103199u**
• **CHEMISTRY OF MATERIALS, vol. 4, no. 6, November/December 1992, Washington, DC (US); J. CHEN et al., pp. 1373-1380**

## Description

The present invention relates to aluminophosphates containing silicon and optionally cobalt in their crystalline structure, hereinafter referred to as (cobalt) silicoaluminophosphates. The present invention further relates to a process for preparing the (cobalt) silicoaluminophosphates and to their use as catalyst, catalyst carrier or molecular sieve.

Crystalline aluminophosphates and related compounds are well known materials which find a promising reception in industry as new generations of molecular sieves, catalyst carriers as well as catalysts. For instance, in United States patent specification No. 4,310,440 (US 4,310,440) a new class of aluminophosphates has been described having a crystalline microporous structure comparable with zeolitic aluminosilicates. A disadvantage of these crystalline aluminophosphates is that the aluminophosphate structures are substantially neutral, that is, no charge-balancing cations are present in the structure and the structure lacks acid and/or basic sites. Hence, the aluminophosphates have limited applicability as catalyst.

In order to create acid sites in the crystalline aluminophosphate structure, related compounds have been synthesised in which Al and/or P is partly replaced by other elements. United States patent specification No. 4,440,871 describes siliconaluminophosphates (SAPO), substantially having the same crystalline structures as described in US 4,310,440, but containing silicon next to Al and P in the crystalline structure. United States patent specification No. 4,567,029 describes metal aluminophosphates (MeAPO), wherein the metal is chosen from the group of magnesium, cobalt (CoAPO = cobalt aluminophosphates), manganese and zinc. United States patent specification No. 4,793,984 describes 'ELAPSO' compositions, that is 'element silicoaluminophosphates', wherein one of the elements described is cobalt (CoAPSO = cobalt silicoaluminophosphates).

In the ten years following the publication of US 4,310,440, most aluminophosphate structures described in the said publication have been synthesised in the SAPO, CoAPO or CoAPSO form. However, sofar attempts have failed to prepare (cobalt) silicoaluminophospates analogues of a potentially very interesting aluminophosphate, described in US 4,310,440, having in the as-synthesised anhydrous form the structure type 21 and in the calcined form the structure type 25. Cheetham et al. (Acta Cryst. (1991) C47, 1361-1364) describe the synthesis of a cobalt-doped aluminophosphate of structure type 21 (CoAPO-21). The synthesis described herein was carried out under static conditions at 468 K over 4 days, using ethylene diamine as organic template.

This publication is silent on how to prepare other element-substituted aluminophosphates of structure types 21 and 25, like silicon-substituted aluminophosphates of structure types 21 and 25. British patent application publication No. 2 155 916 describes iron-modified aluminophosphates of structure types 21 and 25 and vanadium-modified aluminophosphates of structure types 21 and 25. The reaction conditions applied were similar to the reaction conditions described in US 4,310,440 for the preparation of the aluminophosphates of structure types 21 and 25. A disadvantage associated with iron or vanadium-modified aluminophosphates is that the stable valencies (in air) of iron and vanadium are +3 and +5 respectively. Therefore, even when lower valencies of iron or vanadium are used to substitute for $Al^{3+}$ and $V^{5+}$ in the aluminophosphate crystal lattice, such iron or vanadium aluminophosphate still will lack acidic sites. Stable valencies (in air) of cobalt and silicon are, however, +2 and +4 respectively. Thus it would be highly desirable to be able to prepare (cobalt) silicoaluminophosphates of structure types 21 and 25. However, it has been found that silicon and optionally cobalt modified aluminophosphates of structure types 21 and 25 cannot be prepared by reaction conditions described and exemplified in US 4,310,440. Instead, by applying these reaction conditions, a silicon and optionally cobalt modified aluminophosphate of structure type 20 is produced.

Surprisingly, it has now been found that novel crystalline (cobalt) silicoaluminophosphates of the structure types 21 and 25 can be provided.

The present invention thus relates to a (cobalt) silicoaluminophosphate, having in the as-synthesized anhydrous form an X-ray diffraction pattern containing at least the lines given in Table A,

2

TABLE A

| d (A) | Intensity ($I/I_0$) |
|---|---|
| $8.8 \pm 0.2$ | m/s |
| $5.58 \pm 0.2$ | w/m |
| $3.88 \pm 0.1$ | vs |
| $3.53 \pm 0.1$ | m/s |
| $2.72 \pm 0.05$ | m |
| (v)w = (very) weak, m = moderate, (v)s = (very) strong d (A) = $d_{hkl}$ spacing in Angstrom ($10^{-10}$ m) Intensity ($I/I_0$) = intensity of peaks in X-ray diffraction pattern relative to the strongest peak. | |

and having the chemical composition $mR(Co_cSi_sAl_qP_x)O_2$, wherein R represents an organic template and wherein

$$m = 0.03 - 0.3$$

$$c = 0 - 0.4$$

$$0 < s \leqq 0.4$$

$$q = 0.3 - 0.6$$

$$x = 0.3 - 0.6$$

and wherein $c + s + q + x = 1$.

As $s(+c) > 0$, it will be appreciated that the as-synthesised anhydrous form also contains an appropriate charge-balancing cation, such as a proton or a protonated form of the organic template R.

It should be understood that the as-synthesised anhydrous form as referred to in this specification may also contain chemically bound water or hydroxyl groups.

Preferably, the (cobalt) silicoaluminophosphate has, in the as-synthesised anhydrous from, a chemical composition $mR(Co_cSi_sAl_qP_x)O_2$, wherein m = 0.05 - 0.2, c = 0 - 0.2, $0 < s \leqq 0.4$, q = 0.4 - 0.6, and x = 0.4 - 0.6.

In particular, the present invention relates to a (cobalt) silicoaluminophosphate having in the as-synthesized anhydrous form an X-ray diffraction pattern containing at least the lines given in Table I.

TABLE I

| d (A) | Intensity ($I/I_0$) |
|---|---|
| $8.8 \pm 0.2$ | m/s |
| $6.0 \pm 0.2$ | w/m |
| $5.58 \pm 0.2$ | w/m |
| $4.16 \pm 0.1$ | w/m |
| $3.88 \pm 0.1$ | vs |
| $3.76 \pm 0.1$ | w/m |
| $3.53 \pm 0.1$ | m/s |
| $2.72 \pm 0.05$ | m |

The organic template R is typically chosen from the group of amines, imines, amides, imides, diamines, piperazines, pyrrolidines, pyrroles, pyrrolidones and pyrrolines. Preferably, the organic template R, chosen from said group, contains not more than a total of 12 carbon and nitrogen atoms. More preferably, R is chosen from the group comprising trimethylamine, pyrrolidine, 1,4-dimethyl piperazine, 3-(di-n-butylamino)-propylamine, N,N,N',N'-tetramethyl-1,3-propanediamine, N,N-dimethyl-ethanolamine, n-propylamine, N,N,N',N'-tetramethyl-ethylenediamine, ethylenediamine and N-methyl-ethanolamine. In a most preferred embodiment of the invention, pyrrolidine is used.

The present invention further relates to a (cobalt) silicoaluminophosphate, having in the calcined form an X-ray diffraction pattern containing at least the lines given in Table B,

TABLE B

| d (A) | Intensity ($I/I_0$) |
|---|---|
| $9.4 \pm 0.2$ | w/s |
| $5.89 \pm 0.2$ | m/s |
| $4.68 \pm 0.2$ | m/vs |
| $4.18 \pm 0.1$ | s/vs |
| $3.51 \pm 0.1$ | w/m |
| $2.88 \pm 0.05$ | m |

and having the chemical composition $(Co_cSi_sAl_qP_x)O_2$, wherein c = 0 - 0.4, $0 < s \leq 0.4$, q = 0.3 - 0.6, x = 0.3 - 0.6 and wherein c + s + q + x = 1.

As s(+c) > 0, it will be appreciated that the calcined form also contains an appropriate charge-balancing cation, such as a proton.

In particular, the present invention further relates to a (cobalt) silicoaluminophosphate having in the calcined form an X-ray diffraction pattern containing at least the lines given in Table II.

TABLE II

| d (A) | Intensity ($I/I_0$) |
|---|---|
| $9.4 \pm 0.2$ | w/s |
| $5.89 \pm 0.2$ | m/s |
| $4.68 \pm 0.2$ | m/vs |
| $4.18 \pm 0.1$ | s/vs |
| $3.51 \pm 0.1$ | w/m |
| $3.41 \pm 0.05$ | w |
| $3.12 \pm 0.05$ | w |
| $2.88 \pm 0.05$ | m |

Preferably, the (cobalt) silicoaluminophosphate has, in the calcined form, the chemical composition $(Co_cSi_sAl_qP_x)O_2$, wherein c = 0 - 0.2, $0 < s \leq 0.4$, q = 0.4 - 0.6, and x = 0.4 - 0.6.

The invention further relates to a process for preparing a (cobalt) silicoaluminophosphate in the as-synthesised anhydrous form, from a starting mixture comprising a source of phosphorus, a source of aluminium, a source of pyrrolidine and a source of silicon and/or a source of cobalt, keeping the starting mixture at a temperature below 150 °C and a synthesis time of at most 90 hours, separating the (cobalt) silicoaluminophosphate product from the starting mixture and drying.

Preferably, the starting mixture is kept at a temperature of from 100 °C to 145 °C, more preferably of from 120 °C to 145 °C.

The as-synthesised products of the present invention are preferably synthesised according to the process of the present invention by keeping the starting mixture within the selected temperature range for 10 to 90 hours, more preferably for 20 to 80 hours.

Typically, the various components of the starting mixture are initially present in the following molar ratios, wherein R stands for pyrrolidine:

$$R:Al_2O_3 = 0.1 - 3$$

$$P_2O_5:Al_2O_3 = 0.5 - 1.5$$

$$0 < SiO_2:Al_2O_3 \leq 1$$

$$CoO:Al_2O_3 = 0 - 1$$

$$H_2O:Al_2O_3 = 25 - 500.$$

Preferably, the various components of the starting mixture are initially present in the following molar ratios:

$$R:Al_2O_3 = 0.1 - 2$$

$$P_2O_5:Al_2O_3 = 0.8 - 1.5$$

$$0 < SiO_2:Al_2O_3 \leqq 0.8$$

$$CoO:Al_2O_3 = 0 - 0.6$$

$$H_2O:Al_2O_3 = 30 - 350.$$

It has been found that the synthesis of the products according to the present invention is facilitated and products of constant quality and composition are obtained when the starting mixture is kept in motion, continuously or intermittently, for example by stirring.

The synthesis of the products according to the present invention can be further facilitated by adding seeds to the starting mixture.

In principle, any source of phosphorus can be used in the starting mixture. Examples of suitable phosphorus sources comprise phosphorus acids and derivates thereof such as esters, phosphorus oxides, phosphates and phosphites and mixtures of various phosphorus sources. Particular good results have been obtained with phosphoric acid as phosphorus source.

Examples of suitable aluminium sources comprise aluminium salts, aluminium (hydr)oxides, such as gamma and theta alumina, gibbsite, boehmite, pseudo-boehmite and aluminium alkoxides, such as aluminium triisopropoxide and mixtures of various aluminium sources. Typically, boehmite or pseudo-boehmite is used as an alumina source.

Examples of suitable sources of silicon and optionally cobalt comprise the appropriate chlorides, iodides, bromides, nitrates, sulphates, oxides, hydroxides, alkoxides and acetates, preferably acetates, alkoxides, hydroxides and/or oxides.

For preparing the starting mixture, any source or promoter form based on a pyrrolidine can be used as organic template, such as a quaternary ammonium compound of the pyrrolidine, which source or promoter should be such that it can be converted into the pyrrolidine.

It is to be understood that the products of the present invention can be prepared by a variety of organic templates, and not necessarily only by a process using pyrrolidine. The organic template R is typically chosen from the group of amines, imines, amides, imides, diamines, piperazines, pyrrolidines, pyrroles, pyrrolidones and pyrrolines. Preferably, the organic template R, chosen from said group, contains not more than a total of 12 carbon and nitrogen atoms. More preferably, R is chosen from the group comprising trimethylamine, pyrrolidine, 1,4-dimethyl piperazine, 3-(di-n-butylamino)-propylamine, N,N,N',N'-tetramethyl1,3-propanediamine, N,N-dimethyl-ethanolamine, n-propylamine, N,N,N',N'-tetramethyl-ethylenediamine, ethylenediamine and N-methyl-ethanolamine. However, it has been found that the reaction conditions necessary for preparing the products of the present invention, may vary considerably, depending inter alia on the template that is used. For example, when N,N,N',N'-tetramethyl-ethylenediamine and ethylenediamine are used in a process for preparing the products of the present invention, typical reaction conditions include a reaction temperature in the range of from 140 to 190 °C and a synthesis time of from 20 to 100 hours.

The present invention further relates to a process for preparing a (cobalt) silicoaluminophosphate in the calcined form, as described hereinbefore, which comprises preparing an as-synthesised (cobalt) silicoaluminophosphate by a process as described hereinbefore, followed by calcining the as-synthesised (cobalt) (silicon)aluminophosphate at a temperature in the range of from 300 °C to 800 $^{\circ}$C, in the presence of an oxygen-containing atmosphere. Preferably, the calcination is carried out at a temperature in the range of from 450 °C to 700 °C.

The calcined (cobalt) silicoaluminophosphate according to the present invention may be used as molecular sieve, catalyst or catalyst carrier in the operation of a separation process or a catalytic process. If desired, one or more (catalytically) active species, in particular, protons and/or precursors thereof and/or one or metal compound(s) of Group I, II, III and/or the Transition Metals and/or Rare Earth Metals and/or precursors thereof, can be introduced into the (cobalt) silicoaluminophosphate according to the present invention.

The (catalytically) active metals can be introduced into the (cobalt) silicoaluminophosphate by well-known techniques such as impregnation and ion-exchange.

The invention will now be illustrated by means of the following Examples.

## Example I

A crystalline siliconaluminophosphate in the as-synthesised anhydrous form according to the present invention and referred to as SAPO-21, was prepared by combining two slurries A and B, wherein A is composed of a mixture of 27.9 grammes of pseudoboehmite (Catapal B, 73.2 %), 46.2 grammes of ortho-phosphoric acid (85 %) and 113.1 grammes of water, and B is composed of 14.1 grammes of pyrrolidine (R) and 9.36 grammes of silica sol (Ludox, 38.5%), giving a starting mixture composition on a molar basis of 1 $Al_2O_3$ : 0.3 $SiO_2$ : 1 $P_2O_5$ : 1 R : 40 $H_2O$. After homogenation, the starting mixture was transferred to a Medimex (tradename) autoclave where it was kept under stirring at 145 °C and autogeneous pressure for a period of 24 hours.

After synthesis, the crystalline compound produced was separated from the mother liquor by centrifugation, water washed and dried.

The crystalline compound obtained, had in the anhydrous form the chemical composition 0.16 R $(Si_{0.01}Al_{0.51}P_{0.48})O_2$ and an X-ray diffraction pattern containing the lines given in Table III.

TABLE III

| d (Å) | Intensity ($I/I_0$) |
|---|---|
| 8.805 | 40 |
| 7.845 | 5 |
| 7.491 | 4 |
| 7.211 | 21 |
| 6.207 | 26 |
| 6.027 | 24 |
| 5.578 | 20 |
| 4.334 | 17 |
| 4.152 | 20 |
| 3.925 | 61 |
| 3.918 | 63 |
| 3.882 | 100 |
| 3.754 | 24 |
| 3.532 | 86 |
| 2.716 | 42 |

## Examples II and III

The experiment described in Example I was repeated but applying a synthesis temperature of 150 °C (not according to the invention) and times as indicated in Table IV.

Table IV

| Example | Synthesis Time [h] | Synthesis Temp. [°C] | Product XRD |
|---|---|---|---|
| II | 144 | 150 | SAPO-20 |
| III | 24 | 150 | SAPO-20 |

The comparative experiments described in Examples II and III yielded SAPO-20 instead of SAPO-21 according to the invention. It can be seen from Example I that at a synthesis temperature and time lying within the scope of the present invention, a product (SAPO-21) in accordance with the present invention is obtained. However, as shown in Examples II and III, SAPO-20 is obtained at a synthesis temperature just outside the range as claimed in the process of the present invention.

Example IV

The experiment described in Example I was repeated but using a starting mixture composition on a molar basis of 0.6 $SiO_2$ : 1 $Al_2O_3$ : 1 $P_2O_5$ : 1 R : 40 $H_2O$. After working up (synthesis, separation, washing, drying) SAPO-21 was obtained with, in the anhydrous form, the chemical composition 0.15 R $(Si_{0.1}Al_{0.48}P_{0.42})O_2$ and having essentially the same lines in its X-ray diffraction pattern as shown in Table III.

Example V

The experiment described in Example I was repeated but using a starting mixture composition on a molar basis of 0.3 $SiO_2$ : 0.8 $Al_2O_3$ : 1 $P_2O_5$ : 1 R : 40 $H_2O$. After working up (synthesis, separation, washing, drying) SAPO-21 was obtained with, in the anhydrous form, the chemical composition 0.15 R $(Si_{0.09}Al_{0.45}P_{0.46})O_2$ and having essentially the same lines in its X-ray diffraction pattern as shown in Table III.

Examples VI and VII

The SAPO-21 obtained in Example I was calcined in air at 600 °C for 3 hours. After calcination of the SAPO-21 a silico aluminophosphate was obtained, in the calcined form according to the present invention and referred to as SAPO-25. The SAPO-25 had the same chemical composition as the product obtained in Example I, but with no organic template R present, and an X-ray diffraction pattern containing the lines given in Table V.

TABLE V

| d (Å) | Intensity ($I/I_0$) |
|-------|---------------------|
| 9.371 | 28 |
| 7.574 | 4 |
| 5.891 | 56 |
| 4.684 | 45 |
| 4.180 | 100 |
| 3.818 | 7 |
| 3.780 | 6 |
| 3.636 | 9 |
| 3.505 | 40 |
| 3.407 | 15 |
| 3.117 | 12 |
| 2.885 | 29 |
| 2.686 | 8 |

**Claims**

1. (Cobalt) silicoaluminophosphate, having in the as-synthesized anhydrous form an X-ray diffraction pattern containing at least the lines given in Table A,

TABLE A

| d (A) | Intensity ($I/I_0$) |
|-------|---------------------|
| 8.8 ± 0.2 | m/s |
| 5.58 ± 0.2 | w/m |
| 3.88 ± 0.1 | vs |
| 3.53 ± 0.1 | m/s |
| 2.72 ± 0.05 | m |

EP 0 587 215 B1

and having the chemical composition $mR(Co_cSi_sAl_qP_x)O_2$, wherein R represents an organic template and wherein

$$m = 0.03 - 0.3$$

$$c = 0 - 0.4$$

$$0 < s \leq 0.4$$

$$q = 0.3 - 0.6$$

$$x = 0.3 - 0.6$$

and wherein $c + s + q + x = 1$ and $c + s > 0$.

2.  (Cobalt) silicoaluminophosphate as claimed in claim 1, wherein the chemical composition $mR(Co_cSi_sAl_qP_x)O_2$,

$$m = 0.05 - 0.2,$$

$$c = 0 - 0.2,$$

$$0 < s \leq 0.4,$$

$$q = 0.4 - 0.6, \text{ and}$$

$$x = 0.4 - 0.6.$$

3.  (Cobalt) silicoaluminophosphate as claimed in claim 1 or 2, having in the as-synthesized anhydrous form an X-ray diffraction pattern containing at least the lines given in Table I.

TABLE I

| d (A) | Intensity ($I/I_0$) |
| --- | --- |
| $8.8 \pm 0.2$ | m/s |
| $6.0 \pm 0.2$ | w/m |
| $5.58 \pm 0.2$ | w/m |
| $4.16 \pm 0.1$ | w/m |
| $3.88 \pm 0.1$ | vs |
| $3.76 \pm 0.1$ | w/m |
| $3.53 \pm 0.1$ | m/s |
| $2.72 \pm 0.05$ | m |

4.  (Cobalt) silicoaluminophosphate as claimed in any one of claims 1-3, wherein R is an organic template chosen from the group of amines, imines, amides, imides, diamines, piperazines, pyrrolidines, pyrroles, pyrrolidones and pyrrolines, preferably, the organic template R, chosen from said group, contains not more than a total of 12 carbon and nitrogen atoms, more preferably, R is an organic template chosen from the group comprising trimethylamine, pyrrolidine, 1,4-dimethyl piperazine, 3-(di-n-butylamino)propylamine, N,N,N',N'-tetramethyl- 1,3-propanediamine, N,N-dimethyl-ethanolamine, n-propylamine, N,N,N',N'-tetramethyl-ethylenediamine, ethylenediamine and N-methyl-ethanolamine, even more preferably, pyrrolidine.

**5.** (Cobalt) silicoaluminophosphate, having in the calcined form an X-ray diffraction pattern containing at least the lines given in Table B,

TABLE B

| d (A) | Intensity ($I/I_0$) |
|---|---|
| 9.4 ± 0.2 | w/s |
| 5.89 ± 0.2 | m/s |
| 4.68 ± 0.2 | m/vs |
| 4.18 ± 0.1 | s/vs |
| 3.51 ± 0.1 | w/m |
| 2.88 ± 0.05 | m |

and having the chemical composition $(Co_cSi_sAl_qP_x)O_2$, wherein

$$c = 0 - 0.4$$

$$0 < s \leq 0.4$$

$$q = 0.3 - 0.6$$

$$x = 0.3 - 0.6$$

and wherein $c + s + q + x = 1$.

**6.** (Cobalt) silicoaluminophosphate as claimed in claim 5, wherein the chemical composition $(Co_cSi_sAl_qP_x)O_2$,

$$c = 0 - 0.2,$$

$$0 < s \leq 0.4,$$

$$q = 0.4 - 0.6, \text{ and}$$

$$x = 0.4 - 0.6.$$

**7.** (Cobalt)silicoaluminophosphate as claimed in claim 5 or 6, having in the calcined form an X-ray diffraction pattern containing at least the lines given in Table II.

TABLE II

| d (A) | Intensity ($I/I_0$) |
|---|---|
| 9.4 ± 0.2 | w/s |
| 5.89 ± 0.2 | m/s |
| 4.68 ± 0.2 | m/vs |
| 4.18 ± 0.1 | s/vs |
| 3.51 ± 0.1 | w/m |
| 3.41 ± 0.05 | w |
| 3.12 ± 0.05 | w |
| 2.88 ± 0.05 | m |

**8.** (Cobalt) silicoaluminophosphate as claimed in any one of claims 5-7, comprising one or more (catalytically) active species, in particular, protons and/or precursors thereof and/or one or metal compound(s) of Group I, II, III and/or the Transition Metals and/or Rare Earth Metals and/or precursors thereof.

9. Process for preparing a (cobalt) silicoaluminophosphate as claimed in claim 1, from a starting mixture comprising a source of phosphorus, a source of aluminium, a source of pyrrolidine and a source of silicon and optionally a source of cobalt, keeping the starting mixture at a temperature below 150 °C, preferably at a temperature of from 100 °C to 145 °C and a synthesis time of at most 90 hours, preferably at a synthesis time of from 10 to 90 hours, separating the (cobalt)silicoaluminophosphate product from the starting mixture and drying.

10. Process as claimed in claim 9, wherein the various components of the starting mixture are initially present in the following molar ratios:

$$R:Al_2O_3 = 0.1 - 3$$

$$P_2O_5:Al_2O_3 = 0.5 - 1.5$$

$$0 < SiO_2:Al_2O_3 \leq 1$$

$$CoO:Al_2O_3 = 0 - 1$$

$$H_2O:Al_2O_3 = 25 - 500.$$

11. Process as claimed in claim 10, wherein the various components of the starting mixture are initially present in the following molar ratios:

$$R:Al_2O_3 = 0.1 - 2$$

$$P_2O_5:Al_2O = 0.8 - 1.5$$

$$0 < SiO_2:Al_2O_3 \leq 0.8$$

$$CoO:Al_2O_3 = 0 - 0.6$$

$$H_2O:Al_2O_3 = 30 - 350.$$

12. Process as claimed in any one of claims 9-11, wherein phosphoric acid is used as phosphorus source.

13. Process for preparing a (cobalt) silicoaluminophosphate as claimed in claim 5, which comprises preparing an as-synthesised (cobalt) silicoaluminophosphate by a process as claimed in any one of claims 9-12, followed by calcining the as-synthesised (cobalt) silicoaluminophosphate at a temperature in the range of from 300 °C to 800 °C, in the presence of an oxygen-containing atmosphere, preferably at a temperature in the range of from 450 °C to 700 °C.

14. Use of a (cobalt) silicoaluminophosphate as claimed in any one of claims 5-8, as a catalyst or catalyst carrier or as a molecular sieve.

**Patentansprüche**

1. (Cobalt)Silicoalumophosphate, die in der bei der Synthese anfallenden wasserfreien Form ein Röntgenbeugungsdiagramm besitzen, das zumindest die in der Tabelle A angegebenen Linien aufweist

TABELLE A

| d (Å) | Intensität ($I/I_0$) |
|---|---|
| 8,8 ± 0,2 | m/s |
| 5,58 ± 0,2 | w/m |
| 3,88 ± 0,1 | ss |
| 3,53 ± 0,1 | m/s |
| 2,72 ± 0,05 | m |

und die folgende chemische Zusammensetzung: $mR(Co_cSi_sAl_qP_x)O_2$ besitzen, wobei R ein organisches Templat und wobei

$$m = 0,03 - 0,3$$

$$c = 0 - 0,4$$

$$0 < s \leq 0,4$$

$$q = 0,3 - 0,6$$

$$x = 0,3 - 0,6 \text{ bedeuten}$$

und wobei $c + s + q + x = 1$ und $c + s > 0$ ist.

2. (Cobalt)Silicoalumophosphate nach Anspruch 1, wobei

$$m = 0,05 - 0,2,$$

$$c = 0 - 0,2,$$

$$0 < s \leq 0,4,$$

$$q = 0,4 - 0,6 \text{ und}$$

$$x = 0,4 - 0,6 \text{ bedeuten}.$$

3. (Cobalt)Silicoalumophosphate nach Anspruch 1 oder 2, die in der bei der Synthese anfallenden wasserfreien Form ein Röntgenbeugungsdiagramm besitzen, das zumindest die in der Tabelle I angegebenen Linien aufweist.

TABELLE I

| d (Å) | Intensität $(I/I_0)$ |
|---|---|
| $8,8 \pm 0,2$ | m/s |
| $6,0 \pm 0,2$ | w/m |
| $5,58 \pm 0,2$ | w/m |
| $4,16 \pm 0,1$ | w/m |
| $3,88 \pm 0,1$ | ss |
| $3,76 \pm 0,1$ | w/m |
| $3,53 \pm 0,1$ | m/s |
| $2,72 \pm 0,05$ | m |

4. (Cobalt)Silicoalumophosphate nach einem der Ansprüche 1-3, wobei R ein organisches Templat bedeutet, das aus der Gruppe der Amine, Imine, Amide, Imide, Diamine, Piperazine, Pyrrolidine, Pyrrole, Pyrrolidone und Pyrroline ausgewählt ist, das aus dieser Gruppe ausgewählte organische Templat R vorzugsweise insgesamt nicht mehr als 12 Kohlenstoff- und Stickstoffatome aufweist und R besonders bevorzugt ein organisches Templat bedeutet, das aus der Gruppe Trimethylamin, Pyrrolidin, 1,4-Dimethylpiperazin, 3-(Di-n-butylamino)-propylamin, N,N,N',N'-Tetramethyl-1,3-propandiamin, N,N-Dimethyl-ethanolamin, n-Propylamin, N,N,N',N'-Tetramethyl-ethylendiamin, Ethylendiamin und N-Methyl-ethanolamin und vor allem Pyrrolidin ausgewählt ist.

5. (Cobalt)Silicoalumophosphate, die in der calcinierten Form ein Röntgenbeugungsdiagramm besitzen, das zumindest die in der Tabelle B angegebenen Linien aufweist

TABELLE B

| d (Å) | Intensität (I/I$_0$) |
|---|---|
| 9,4 ± 0,2 | w/s |
| 5,89 ± 0,2 | m/s |
| 4,68 ± 0,2 | m/ss |
| 4,18 ± 0,1 | s/ss |
| 3,51 ± 0,1 | w/m |
| 2,88 ± 0,05 | m |

und die chemische Zusammensetzung $(Co_cSi_sAl_qP_x)O_2$ besitzen, wobei

$$c = 0 - 0,4,$$

$$0 < s \leqq 0,4,$$

$$q = 0,3 - 0,6,$$

$$x = 0,3 - 0,6 \text{ bedeuten}$$

und wobei $c + s + q + x = 1$ ist.

6. (Cobalt)Silicoalumophosphate nach Anspruch 5, wobei die chemische Zusammensetzung $(Co_cSi_sAl_qP_x)O_2$ lautet,

$$c = 0 - 0,2,$$

$$0 < s \leqq 0,4,$$

$$q = 0,4 - 0,6 \text{ und}$$

$$x = 0,4 - 0,6 \text{ bedeuten.}$$

7. (Cobalt)Silicoalumophosphate nach Anspruch 5 oder 6, die in der calcinierten Form ein Röntgenbeugungsdiagramm besitzen, das zumindest die in der Tabelle II angegebenen Linien aufweist.

TABELLE II

| d (Å) | Intensität (I/I$_0$) |
|---|---|
| 9,4 ± 0,2 | w/s |
| 5,89 ± 0,2 | m/s |
| 4,68 ± 0,2 | m/ss |
| 4,18 ± 0,1 | s/ss |
| 3,51 ± 0,1 | w/m |
| 3,41 ± 0,05 | w |
| 3,12 ± 0,05 | w |
| 2,88 ± 0,05 | m |

8. (Cobalt)Silicoalumophosphate nach einem der Ansprüche 5-7, die aus einem oder mehreren (katalytisch) aktiven Stoffen, insbesondere Protonen, und/oder deren Vorstufen und/oder einer oder Verbindungen von Metallen aus Gruppe I, II, III und/oder Übergangsmetallen und/oder Seltenerdmetallen und/oder deren Vorstufen bestehen.

9. Verfahren zur Herstellung von (Cobalt)Silicoalumophosphaten nach Anspruch 1 aus einem Ausgangsgemisch, das eine Phosphorquelle, eine Aluminiumquelle, eine Pyrrolidinquelle und eine Siliciumquelle und gegebenenfalls eine Cobaltquelle enthält, wobei man das Ausgangsgemisch bei einer Temperatur unterhalb 150°C, vorzugsweise bei einer Temperatur im Bereich von 100°C bis 145°C, und einer Synthesedauer von höchstens 90 Stunden, vorzugsweise bei einer Synthesedauer von 10 bis 90 Stunden hält und das Produkt (Cobalt)Silicoalumophosphat aus dem Ausgangsgemisch abtrennt und trocknet.

10. Verfahren nach Anspruch 9, wobei die verschiedenen Komponenten des Ausgangsgemischs zu Beginn in folgenden Molverhältnissen vorliegen:

$$R:Al_2O_3 = 0,1 - 3$$

$$P_2O_5:Al_2O_3 = 0,5 - 1,5$$

$$0 < SiO_2:Al_2O_3 \leq 1$$

$$CoO:Al_2O_3 = 0 - 1$$

$$H_2O:Al_2O_3 = 25 - 500.$$

11. Verfahren nach Anspruch 10, wobei die verschiedenen Komponenten des Ausgangsgemischs zu Beginn in folgenden Molverhältnissen vorliegen:

$$R:Al_2O_3 = 0,1 - 2$$

$$P_2O_5:Al_2O = 0,8 - 1,5$$

$$0 < SiO_2:Al_2O_3 \leq 0,8$$

$$CoO:Al_2O_3 = 0 - 0,6$$

$$H_2O:Al_2O_3 = 30 - 350.$$

12. Verfahren nach einem der Ansprüche 9-11, wobei als Phosphorquelle Phosphorsäure verwendet wird.

13. Verfahren zur Herstellung von (Cobalt)Silicoalumophosphaten nach Anspruch 5, wobei man (Cobalt)Silicoalumophosphate in der bei der Synthese anfallenden Form nach einem Verfahren nach einem der Ansprüche 9-12 herstellt und anschließend die (Cobalt)Silicoalumophosphate in der bei der Synthese anfallenden Form bei einer Temperatur im Bereich von 300°C bis 800°C in Gegenwart einer sauerstoffhaltigen Atmosphäre calciniert.

14. Verwendung der (Cobalt)Silicoalumophosphate nach einem der Ansprüche 5-8 als Katalysator, Katalysatorträger oder als Molekularsieb.

**Revendications**

1. Silicoaluminophosphate (de cobalt), ayant, dans la forme anhydre telle qu'elle est obtenue après synthèse, un diagramme de diffraction des rayons X contenant au moins les lignes données dans le tableau A,

TABLEAU A

| d (A) | Intensité ($I/I_0$) |
|---|---|
| 8,8 ± 0,2 | moyen/intense |
| 5,58 ± 0,2 | faible/moyen |
| 3,88 ± 0,1 | très intense |
| 3,53 ± 0,1 | moyen/intense |
| 2.72 ± 0,05 | moyen |

et ayant la composition chimique $mR(Co_cSi_sAl_qP_x)O_2$, où R représente un prototype organique et où

$$m = 0,03 - 0,3$$

$$c = 0 - 0,4$$

$$0 < s \leq 0,4$$

$$q = 0,3 - 0,6$$

$$x = 0,3 - 0,6$$

et où $c + s + q + x = 1$ et $c + s > 0$.

2. Silicoaluminophosphate (de cobalt) selon la revendication 1, dans lequel la composition chimique $mR(Co_cSi_sAl_qP_x)O_2$,

$$m = 0,05 - 0,2,$$

$$c = 0 - 0,2,$$

$$0 < s \leq 0,4,$$

$$q = 0,4 - 0,6, \text{ et}$$

$$x = 0,4 - 0,6.$$

3. Silicoaluminophosphate (de cobalt), selon la revendication 1 ou 2, ayant, dans la forme anhydre telle qu'elle est obtenue après synthèse, un diagramme de diffraction des rayons X contenant au moins les lignes données dans le tableau I.

TABLEAU I

| d (A) | Intensité ($I/I_0$) |
|---|---|
| $8,8 \pm 0,2$ | moyen/intense |
| $6,0 \pm 0,2$ | faible/moyen |
| $5,58 \pm 0,2$ | faible/moyen |
| $4,16 \pm 0,1$ | faible/moyen |
| $3,88 \pm 0,1$ | très intense |
| $3,76 \pm 0,1$ | faible/moyen |
| $3,53 \pm 0,1$ | moyen/intense |
| $2.72 \pm 0,05$ | moyen |

4. Silicoaluminophosphate selon l'une quelconque des revendications 1 à 3, dans lequel R est un prototype organique choisi parmi le groupe des amines, des imines, des amides, des imides, des diamines, des pipérazines, des pyrrolidines, des pyrroles, des pyrrolidones et des pyrrolines, de préférence le prototype organique R, choisi parmi ledit groupe, ne contient pas plus d'un total de 12 atomes de carbone et d'azote, de manière plus préférable R est un prototype organique choisi parmi le groupe comprenant la triméthylamine, la pyrrolidine, la 1,4-diméthylpipérazine, la 3-(di-n-butylamino)propylamine, la N,N,N',N'-tétraméthyl-1,3-propanediamine, la N,N-diméthyléthanolamine, la n-propylamine, la N,N,N',N'-tétraméthyléthylènediamine, l'éthylènediamine et la N-méthyléthanolamine, de manière encore plus préférable, la pyrrolidine.

**5.** Silicoaluminophosphate (de cobalt), ayant, dans la forme calcinée, un diagramme de diffraction des rayons X contenant au moins les lignes données dans le tableau B,

TABLEAU B

| d (A) | Intensité ($I/I_0$) |
|---|---|
| $9,4 \pm 0,2$ | faible/intense |
| $5,89 \pm 0,2$ | moyen/intense |
| $4,68 \pm 0,2$ | moyen/très intense |
| $4,18 \pm 0,1$ | intense/très intense |
| $3,51 \pm 0,1$ | faible/moyen |
| $2,88 \pm 0,05$ | moyen |

et ayant la composition chimique $(Co_c Si_s Al_q P_x)O_2$, où

$$c = 0 - 0,4$$

$$0 < s \leq 0,4$$

$$q = 0,3 - 0,6$$

$$x = 0,3 - 0,6$$

et où $c + s + q + x = 1$.

**6.** Silicoaluminophosphate (de cobalt) selon la revendication 5, dans lequel la composition chimique $(Co_c Si_s Al_q P_x)O_2$,

$$c = 0 - 0,2,$$

$$0 < s \leq 0,4,$$

$$q = 0,4 - 0,6, \text{ et}$$

$$x = 0,4 - 0,6.$$

**7.** Silicoaluminophosphate (de cobalt) selon la revendication 5 ou 6, ayant, dans la forme calcinée, un diagramme de diffraction des rayons X contenant au moins les lignes données dans le tableau II.

TABLEAU II

| d (A) | Intensité ($I/I_0$) |
|---|---|
| $9,4 \pm 0,2$ | faible/intense |
| $5,89 \pm 0,2$ | moyen/intense |
| $4,68 \pm 0,2$ | moyen/très intense |
| $4,18 \pm 0,1$ | intense/très intense |
| $3,51 \pm 0,1$ | faible/moyen |
| $3,41 \pm 0,05$ | faible |
| $3,12 \pm 0,05$ | faible |
| $2.88 \pm 0,05$ | moyen |

**8.** Silicoaluminophosphate (de cobalt) selon l'une quelconque des revendications 5 à 7, comprenant une ou plusieurs espèces actives (catalytiquement), en particulier des protons et/ou leurs précurseurs et/ou un ou plusieurs compo-

EP 0 587 215 B1

sés métalliques du groupe I, II, III et/ou des métaux de transition et/ou des métaux de terres rares, et/ou leurs précurseurs.

9. Procédé de préparation d'un silicoaluminophosphate (de cobalt) selon la revendication 1, à partir d'un mélange de départ comprenant une source de phosphore, une source d'aluminium, une source de pyrrolidine et une source de silicium et éventuellement une source de cobalt, le maintien du mélange de départ à une température en-dessous de 150 °C, de préférence à une température de 100 °C à 145 °C et pendant un temps de synthèse d'au plus 90 heures, de préférence pendant un temps de synthèse de 10 à 90 heures, la séparation du produit de silicoaluminophosphate (de cobalt) du mélange de départ, et le séchage.

10. Procédé selon la revendication 9, dans lequel les divers composants du mélange de départ sont présents initialement dans les rapports molaires suivants:

$$R : Al_2O_3 = 0,1 - 3$$

$$P_2O_5 : Al_2O_3 = 0,5 - 1,5$$

$$0 < SiO_2 : Al_2O_3 \leqq 1$$

$$CoO : Al_2O_3 = 0 - 1$$

$$H_2O : Al_2O_3 = 25 - 500.$$

11. Procédé selon la revendication 10, dans lequel les divers composants du mélange de départ sont présents initialement dans les rapports molaires suivants:

$$R : Al_2O_3 = 0,1 - 2$$

$$P_2O_5 : Al_2O = 0,8 - 1,5$$

$$0 < SiO_2 : Al_2O_3 \leqq 0,8$$

$$CoO : Al_2O_3 = 0 - 0,6$$

$$H_2O : Al_2O_3 = 30 - 350.$$

12. Procédé selon l'une quelconque des revendications 9 à 11, dans lequel on utilise de l'acide phosphorique en tant que source de phosphore.

13. Procédé de préparation d'un silicoaluminophosphate (de cobalt) selon la revendication 5, qui comprend la préparation d'un silicoaluminophosphate (de cobalt), tel qu'il a été obtenu après synthèse, par un procédé selon l'une quelconque des revendications 9 à 12, laquelle préparation est suivie d'une calcination du silicoaluminophosphate (de cobalt), tel qu'il a été obtenu après synthèse, à une température dans le domaine de 300 °C à 800 °C, en présence d'une atmosphère contenant de l'oxygène, de préférence à une température dans le domaine de 450 °C à 700 °C.

14. Utilisation d'un silicoaluminophosphate (de cobalt) selon l'une quelconque des revendications 5 à 8, en tant que catalyseur ou que support de catalyseur ou en tant que tamis moléculaire.

16